# Europäisches Patentamt

# European Patent Office

# Office européen des brevets

(19)

(11) Veröffentlichungsnummer: **0 271 578 B1**

(12) **EUROPÄISCHE PATENTSCHRIFT**

(45) Veröffentlichungstag der Patentschrift:
**10.04.91 Patentblatt 91/15**

(51) Int. Cl.⁵: **H05B 6/24, H05B 11/00,**
**C22B 9/20, F27B 14/06**

(21) Anmeldenummer: **86904991.6**

(22) Anmeldetag: **30.05.86**

(86) Internationale Anmeldenummer:
**PCT/SU86/00057**

(87) Internationale Veröffentlichungsnummer:
**WO 87/07307 03.12.87 Gazette 87/27**

(54) **VERFAHREN ZUM SCHMELZEN VON METALL IN EINEM INDUKTIONSPLASMAOFEN.**

(43) Veröffentlichungstag der Anmeldung:
**22.06.88 Patentblatt 88/25**

(45) Bekanntmachung des Hinweises auf die
Patenterteilung:
**10.04.91 Patentblatt 91/15**

(84) Benannte Vertragsstaaten:
**AT DE GB IT SE**

(56) Entgegenhaltungen:
**EP-A- 0 066 502**
**US-A- 2 570 311**

(73) Patentinhaber: **VSESOJUZNY**
**NAUCHNO-ISSLEDOVATELSKY**
**PROEKTNO-KONSTRUKTORSKY I**
**TEKHNOLOGICHESKY INSTITUT**
**ELEKTROTERMICHESKOGO**
**OBORUDOVANIA**
**VNIIETO, ul. Nizhegorodskaya, 29**
**Moscow 109052 (SU)**

(72) Erfinder: **MALINOVSKY, Vladimir Sergeevich**
**pr. Vernadskogo, 9-542**
**Moscow, 117311 (SU)**
Erfinder: **DOLGOV, Viktor Vasilievich**
**Leninsky pr., 66-69**
**Moscow, 117299 (SU)**
Erfinder: **FOMIN, Nikolai Ivanovich**
**ul. Tashkentskaya, 4-2-83**
**Moscow, 109444 (SU)**
Erfinder: **BOBYLEV, Viktor Matveevich**
**ul. Khalturinskaya, 4-2-52**
**Moscow, 107392 (SU)**
Erfinder: **SVIDO, Alexandr Viktorovich**
**ul. Bosova, 1-19 Moskovskaya obl.**
**Istra, 143500 (SU)**

(74) Vertreter: **Patentanwälte Beetz sen. - Beetz**
**jun. Timpe - Siegfried - Schmitt-Fumian- Mayr**
**Steinsdorfstrasse 10**
**W-8000 München 22 (DE)**

## Beschreibung

### Gebiet der Technik

Die Erfindung bezieht sich auf Metallschmelzverfahren und betrifft Verfahren zum Schmelzen von Metall in einem Plasmainduktionsofen.

### Zugrundeliegender Stand der Technik

Es ist ein Verfahen zum Schmelzen von Metall in einem Plasmainduktionsofen (V. N. Kostjakov u.a., Sammelband "Technologie und Organisation der Produktion", Nr. 3, 1971, Verlag UKRNIITM, Kiew, S. 51 bis 53) durch Schmelzen des Metalls gleichzeitig mit Hilfe eines Plasmalichtbogens und des Magnetfeldes eines Induktors, durch die Wechselwirkung des Plasmalichtbogens mit dem Magnetfeld des Induktors, die von Schwankungen der Energiekennwerte des Plasmalichtbogens und der Entstehung eines Schalldrucks begleitet wird, und durch Kontrolle der Energiekennwerte des Plasmalichtbogens und deren Vergleich mit vorgegebenen Energiekennwerten des Plasmalichtbogens bekannt.

Nach diesem Verfahren gerät jedoch der gewöhnlich entlang der Längsachse des Plasmainduktionsofens gerichtete Plasmalichtbogen mit der Zunahme der Menge des geschmolzenen Metalls in die Einflußzone des Magnetfelds des Induktors und nimmt die form einer Spirale an, die sich um die Achse des Ofens mit einer ziemlich hohen Geschwindigkeit dreht, was von intensiven Schwankungen der Energiekennwerte des Plasmalichtbogens und der Entstehung eines Schalldrucks (eines Lärmes) begleitet wird, wodurch ein instabiler Brennprozeß des Plasmalichtbogens hervorgerufen wird, was wiederum die Arbeitsbedingungen für das Bedienungspersonal verschlechtert.

Außerdem verringert man nach diesem Verfahren zur Gewährleistung eines stabilen Brennens des Plasmalichtbogens und gleichzeitig zur Senkung des schalldrucks (des Lärms) die Leistung des Plasmalichtbogens, wodurch die Leistung des Plasmainduktionsofens reduziert wird.

### Offenbarung der Erfindung

Der vorliegenden Erfindung liegt die Aufgabe zugrunde, ein Verfahren zum Schmelzen von Metall in einem Plasmainduktionsofen zu entwickeln, das solche zusätzliche Arbeitsgänge einschließt, die es ermöglichen, die Stabilität des Brennens des Plasmalichtbogens zu verbessern und die dem Plasmainduktionsofen zugeführte Leistung auf maximalem Niveau zu halten.

Das wird dadurch erzielt, daß in einem Verfahren zum Schmelzen von Metall in einem Plasmainduktionsofen durch Schmelzen des Metalls gleichzeitig mit Hilfe eines Plasmalichtbogens und des Magnetfeldes eines Induktors, durch die Wechselwirkung des Plasmalichtbogens mit dem Magnetfeld des Induktors, die von Schwankungen der Energiekennwerte des Plasmalichtbogens und der Entstehung eines Schalldrucks begleitet wird, durch Kontrolle der Energiekennwerte des Plasmalichtbogens und deren Vergleich mit vorgegebenen Energiekennwerten des Plasmalichtbogens gemäß der erfindung bei der Kontrolle der Energiekennwerte des Plasmalichtbogens zusätzlich die Kontrolle des Schalldruckes in jedem Moment seiner Entstehung bei der Wechselwirkung des Plasmalichtbogens mit dem Magnetfeld des Induktors je nach dem Eindringen des Plasmalichtbogens in das zu schmelzende Metall vorgenommen und die Stärke des Magnetfelds des Induktors so weit verringert wird, bis der Schalldruck beseitigt ist.

Es ist zweckmäßig, daß nach dem erfindungsgemäßen Verfahren zum Schmelzen von Metall in einem Plasmainduktionsofen die Verringerung der Stärke des Magnetfelds des Induktors durch aufeinanderfolgendes Parallelschalten der Windungen des Induktors in Richtung des Vordringens der Schmelzzone in das zu schmelzende Metall vorgenommen wird.

Es ist erwünscht, daß nach dem erfindungsgemäßen Verfahren zum Schmelzen von Metall in einem Plasmainduktionsofen die Kontrolle des Schalldrucks durch Messen der Schwankungen der Energiekennwerte des Plasmalichtbogens erfolgt.

Die vorliegende Erfindung ermöglicht die Entstehung einer konstanten vorgegebenen Form des Plasmalichtbogens, was zu einem stabilen Brennprozeß des Lichtbogens und zur Beseitigung des Schalldrucks (des Lärms) führt, was wiederum die Arbeitsbedingungen für das Bedienungspersonal verbessert.

Außerdem ermöglicht die vorliegende Erfindung, die dem Plasmainduktionsofen zugeführte Leistung auf maximalem Niveau zu halten, wodurch die Leistung des Plasmainduktionsofens erhöht wird.

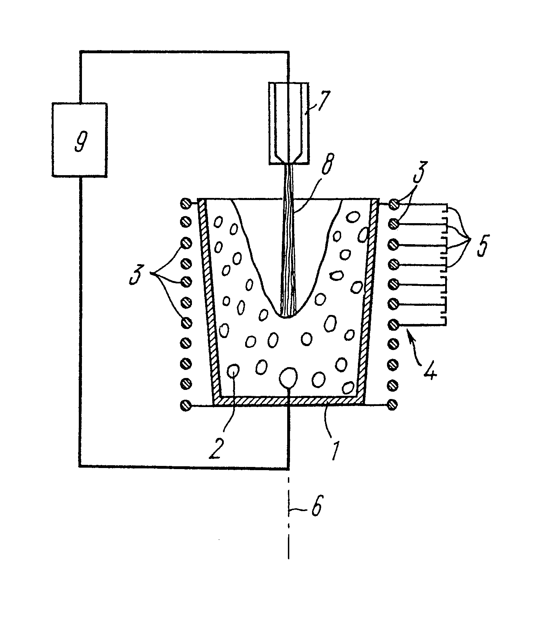

### Kurze Beschreibung der Zeichnung

Im folgenden wird die vorliegende Erfindung durch die Beschreibung eines konkreten Ausführungsbeispiels und durch die beiliegende Zeichnung erläutert, in der das funktionsschema eines weit bekannten Plasmainduktionsofens (im Längsschnitt) zur Veranschaulichung des erfindungsgemäßen Verfahrens zum Schmelzen von Metall in einem Plasmainduktionsofen abgebildet ist.

### Beste Ausführungsvariante der Erfindung

Der Plasmainduktionsofen enthält einen Tiegel 1 mit geschmolzenem Metall 2. Der Tiegel 1 ist von den Windungen 3 eines Induktors 4 umgeben. An die Windungen 3 sind Schalter 5 angeschlossen. Über dem Tiegel 1 befindet sich koaxial zu dessen Achse 6 ein Plasmatron 7. Zwischen dem Plasmatron 7 und dem geschmolzenen Metall 2 ist ein Plasmalichtbogen 8 schematisch dargestellt. Das geschmolzene Metall 2 und das Plasmatron 7 sind an eine den Plasmalichtbogen speisende Gleichstromquelle 9 angeschlossen.

Das Verfahren zum Schmelzen von Metall in einem Plasmainduktionsofen besteht darin, daß im Tiegel 1 Metall 2 geschmolzen wird durch die gleichzeitige Wirkung eines Plasmalichtbogens 8 und des Magnetfelds eines Induktors 4 und der Plasmalichtbogen 8 mit diesem Magnetfeld in Wechselwirkung steht, die von Schwankungen der Energiekennwerte (z.B. der Spannung) des Plasmalichtbogens 8 und der Entstehung eines Schalldrucks (Lärms) begleitet wird. Danach kontrolliert man die Größe der Spannung des Plasmalichtbogens 8 und vergleicht sie mit einer vorgegebenen Größe. Gleichzeitig wird zusätzlich der Schalldruck (Lärm) in jedem Moment seiner Entstehung beim Eindringen des Plasmalichtbogens 8 in das zu schmelzende Metall 2 bei der Wechselwirkung des Plasmalichtbogens 8 mit dem von den Windungen 3 des Induktors 4 erzeugten Magnetfeld gemessen und die Stärke des Magnetfelds des Induktors 4 so weit verringert, bis der Schalldruck beseitigt ist.

Nach dem erfindungsgemäßen Verfahren zum Schmelzen von Metall in einem Plasmainduktionsofen erfolgt die Verringerung der Stärke des Magnetfleds des Induktors 4 durch aufeinanderfolgendes Parallelschalten der Windungen 3 des Induktors 4 in Richtung des Vordringens der Schmelzzone in das zu schmelzenden Metall 2.

Außerdem wird nach dem erfindungsgemäßen Verfahren zum Schmelzen von betall in einem Plasmainduktionsofen der Schalldruck (Lärm) durch Messen der Schwankungswerte der Spannung des Plasmalichtbogens 2 Kontrolliert.

Zum besseren Verständnis der vorliegenden Erfindung werden folgende konkrete Ausführungsbeispiele angeführt. Beispiel 1. Im Tiegel 1 ist Metall 2 geschmolzen worden durch gleichzeitige Wirkung eines Plasmalichtbogens 8 und des Magnetfelds eines Induktors 4 und ist die Wechselwirkung zwischen dem Plasmalichtbogen 8 und diesem Magnetfeld erfolgt, die von Schwankungen der Spannung des Plasmalichtbogens 8 und der Entstehung eines Schalldrucks (eines Lärms) begleitet worden ist. Danach hat man die Größe der Spannung des Plasmalichtbogens 8 gemessen und sie mit einer vorgegebenen Größe verglichen. Gleichzeitig erfolgte zusätzlich die Kontrolle des Schalldrucks (des Lärms) in jedem Moment seiner Entstehung beim eindringen des Plasmalichtbogens 8 in das zu schmelzende Metall 2 bei der Wechselwirkung des Plasmalichtbogens 8 mit dem von den Windungen 3 des Induktors erzeugten Magnetfeld. Zu diesem Zweck ist in einer entfernung von 1,5 m vom Tiegel 1 ein Gerät zum Messen des Schalldrucks (in der Zeichnung nicht abgebildet) aufgestellt worden. Bei Wahrnehmung eines Schalldrucks (eines Lärms) sind nacheinander in Richtung des Vordringens der Schmelzzone in das zu schmelzenden Metall 2 die Windungen 3 des Induktors 4 parallelgeschaltet worden bis zur Beseitigung des erwähnten Scalldrucks.

Beispiel 2. In den Hauptzügen ist das Verfahren auf gleiche Weise wie im Beispiel 1 realisiert worden, jedoch mit dem Unterschied, daß die kontrolle des Schalldrucks durch Messen und Vergleichen der Größe der Spannung am Plasmalichtbogen 8 und deren veränderlicher Komponente erfolgte. Sobald der Wert der veränderlichen Komponente der Spannung am Lichtbogen 8 die Spannung am Lichtbogen 8 um mehr als 5% überstiegen hat, ist die Stärke des von den Windungen 3 des Induktors 4 erzeugten und den Lichtbogen 8 umgebenden Magnetfelds verringert worden. Zu diesem Zweck ist ein Teil dieser Windungen 3 in Richtung des Vordringens der Schmelzzone in das zu schmelzende Metall 2 im Tiegel 1 parallelgeschaltet worden, so daß diese Überschreitung verschwunden ist.

Wie aus den Beispielen 1 und 2 ersichtlich, wird auf diese Weise von Anfang an das Entstehen eines Schalldrucks durch Kontrolle desselben verhindert, wodurch die Arbeitsbedingungen für das Bedienungspersonal verbessert werden und ein stabiler Brennprozeß des Plasmalichtbogens 9 geschaffen wird, wodurch es möglich wird, die dem Plasmainduktionsofen zugeführte Leistung auf maximalem Niveau zu halten, was wiederum dessen Leistung erhöht.

Industrielle Anwendbarkeit

Die vorliegende Erfindung kann im Hütten- und Gießereiwesen verwendet werden.

**Ansprüche**

1. Verfahren zum Schmelzen von Metall in einem Plasmainduktionsofen durch Schmelzen des Metalls gleichzeitig durch einen Plasmalichtbogen (8) und durch das Magnetfeld eines Induktors (4), durch die Wechelwirkung des Plasmalichtbogens (8) mit dem Magnetfeld des Induktors (4), die von Schwankungen der Energiekennwerte des Plasmalichtbogens und der Entstehung eines Schalldrucks begleitet wird, und durch Kontrolle der Energiekennwerte des Plasmalichtbogens (8) und deren Vergleich mit vorgegebenen Energiekennwerten des Plasmalichtbogens (8), dadurch gekennzeichnet, daß bei der Kontrolle der Energiekennwerte des Plasmalichtbogens (8) zusätzlich der Schalldruck kontrolliert wird in jedem Moment seiner Entstehung bei der Wechselwirkung des Plasmalichtbogens (8) mit dem Magnetfeld des Induktors (4) beim Eindringen des Plasmallichtbogens (8) in das zu schmelzende Metall (2) und daß die Stärke des Magnetfelds des Induktors (4) so weit verringert wird, bis der Schalldruck verschwindet.

2. Verfahren nach Anspruch 1, dadurch gekennzeichnet, daß die Verringerung der Stärke des Magnetfelds des Induktors (4) durch aufeinanderfolgendes Parallelschalten der Windungen (3) des Induktors (4) in Richtung des Vordringens der Schmelzzone in das zu schmelzenden Metall (2) vorgenommen wird.

3. Verfahren nach Anspruch 1 oder 2, dadurch gekennzeichnet, daß die Kontrolle des Schalldrucks durch Messen der Schwankungen der Energiekennwerte des Plasmalichtbogens (8) erfolgt.

## Claims

1. A method of melting metal in an induction-plasma furnace, comprising the operations of melting metal under the simultaneous and combined effect of a plasma arc (8) and of a magnetic field of an inductor coil (4), an interaction between the plasma arc (8) and the magnetic coil (4) which is accomplished by fluctuations in the energetic parameters of the plasma arc and which gives rise to the sound pressure phenomenon, controlling the values of the energetic parameters of the plasma arc (8) and comparing the values thus-obtained with the prescribed values of the plasma arc (8), characterized in that in the course of controlling the energetic parameters of the plasma arc (8), the sound pressure (noise) level is additionally controlled at each moment ever since its emergence as a result of an interaction between the plasma arc (8) and the magnetic field around the inductor coil (4) as the plasma arc (8) progressively advances by fusion into the metal (2) to be melted, followed by lowering the magnetic field intensity around the inductor coil (4) until the sound pressure phenomenon is fully suppressed.

2. The method as claimed in Claim 1, characterized in that the intensity of the magnetic field generated by the inductor coil (4) is lowered by in-series shunting turns (3) of the inductor coil (4) following the direction in which metal (2) is progressively penetrated by fusion.

3. The method as claimed in Claims 1 or 2, characterized in that the sound pressure level is controlled by measuring the range over which the values of the energetic parameters of the plasma arc (8) fluctuate.

## Revendications

1. Procédé de fusion d'un métal dans un four par induction au plasma consistant à le fondre simultanément par un arc de plasma (8) et le champ magnétique d'un inducteur (4) à faire interactionner l'arc de plasma (8) avec le champ magnétique de l'inducteur (4) en provoquant des oscillations des paramètres énergétiques de l'arc de plasma suivies de la formation d'une pression sonique, à contrôler les valeurs des paramètres énergétiques de l'arc de plasma (8) et à les comparer avec les valeurs imposées des paramètres de l'arc de plasma, **caractérisé** en ce qu'en contrôlant les valeurs des paramètres énergétiques de l'arc de plasma (8), on effectue le contrôle supplémentairement du niveau de pression sonique à chaque moment de son apparition à la suite de l'interaction de l'arc de plasma (8) avec le champ magnétique de l'inducteur (4) au fur et à mesure de la pénétration de l'arc de plasma (8) dans le métal fondu (2) et on diminue l'intensité du champ magnétique de l'inducteur (4) jusqu'a ce que la pression sonique soit supprimée.

2. Procédé selon la revendication 1, **caractérisé** en ce qu'on réduit l'intensité du champ magnétique de l'inducteur (4) en shuntant successivement les spires (3) de l'inducteur (4) dans la direction de fusionnement du métal à fondre (2).

3. Procédé selon la revendications 1 ou 2, **caractérisé** en ce qu'on contrôle la pression sonique en mesurant les valeurs d'oscillations des paramètres énergétiques de l'arc de plasma (8).